# EUROPÄISCHE PATENTANMELDUNG

(11) **EP 1 882 926 A2**
(43) Veröffentlichungstag der Anmeldung: **30.01.2008**
(21) Anmeldenummer: 07013096.8
(22) Anmeldetag: 04.07.2007
(51) Int. Cl.: G01N 11/14

(54) **Rheometer**

(30) Priorität: 25.07.2006 DE 102006034390
(71) Anmelder: JADO Extruvision GmbH, 30419 Hannover (DE)
(72) Erfinder: Uphus, Reinhard Dr.-Ing., 30419 Hannover (DE)
(74) Vertreter: Baronetzky, Klaus

(57) **Zusammenfassung**

Die Erfindung betrifft ein Rheometer für die Messung der Viskosität eines Fluids, mit einem Extruder, mit welchem das Rheometer mit dem Fluid füllbar ist. Die Drehzahl des Extruders ist für das Befüllen des Rheometers einstellbar.

## Beschreibung

Die Erfindung betrifft ein Rheometer, gemäß dem Oberbegriff von Anspruch 1, das der Messung der Viskosität eines Fluids dient.

zu den hier zu messenden Fluiden zählen beispielsweise Kautschuk-Mischungen und Polymerschmelzen. Für Polymerschmelzen können z.B. Rotationsviskosimeter nach dem Couetteprinzip oder nach dem Kegel-Platte-Prinzip eingesetzt werden, wobei das letztgenannte Prinzip den Vorteil hat, dass die Schwergeschwindigkeit unabhängig vom Radius konstant ist.

Derartigen Rotationsviskosimetern ist gemeinsam, dass ein rotierender Körper mit einer vorgegebenen Antriebskraft angetrieben wird und der Widerstand, den das Fluid der Drehung entgegensetzt, gemessen wird. Hierdurch lässt sich der Scherwiderstand des Fluids und damit die Viskosität bestimmen.

Voraussetzung für die zutreffende Messung ist es, dass das Fluid sich nicht von der Wand des Rheometers ablöst. Der Rotationskörper darf insofern nicht "durchrutschen".

Um ein Durchrutschen zu verhindern, ist es bekannt geworden, die Wand des Rotationskörpers mit profilierten Oberflächen auszugestalten, wie es bei Mooney-Viskosimetern der Fall ist. Diese Lösung hat sich praktisch durchgesetzt, wobei von gewissen Nachteilen die Realisierung der dortigen Innenecken ist. Beim Wechsel der Zusammensetzung des Fluids verbleiben typischerweise Reste des vorigen Fluids in den Innenecken, so dass es zu Verunreinigungen kommt.

Selbst bei Rheometern mit profilierten Oberflächen kann es bei hoch viskosen und hoch elastischen Mischungen zum Wandgleiten kommen. Typischerweise wird die Viskosität bei einer vorgegebenen Temperatur gemessen, beispielsweise 100 °C, und es wird ein entsprechender Rohling eingelegt, der erwärmt wird. Für den Ausgleich der Temperatur wird eine Wartezeit von beispielsweise 1 Minute einkalkuliert, aber dennoch ist der Temperaturausgleich regelmäßig nicht vollständig, da Polymere ausgesprochen schlechte Wärmeleiter sind.

Durch den Betrieb des Rheometers entsteht andererseits typischerweise eine weitere Temperaturerhöhung und Scherwirkung durch die das Material beansprucht wird. Ein Temperaturausgleich lässt sich insofern regelmäßig erst nach einer ausgesprochen langen Wartezeit realisieren.

Es ist auch bereits bekannt geworden, Rheometer ausgangsseitig eines Extruders anzuschließen. Ein Beispiel für eine derartige Lösung lässt sich aus der DE 33 24 842 entnehmen. Bei dieser Lösung sollen Diskontinuitäten im Flüssigkeitsstrom durch ein speziell gebildetetes Torsionsrohr mit einem Ringspalt vermieden werden. Andererseits ist dies Konstruktion recht aufwändig, aber dennoch kann es bei hochviskosen Fluiden zur Wandablösung kommen.

Daher liegt der Erfindung die Aufgabe zu Grunde, ein Rheometer gemäß dem Oberbegriff von Anspruch 1 zu schaffen, das einen großen Messbereich hat, also auch für hochviskose Materialien geeignet ist, wobei dennoch die Möglichkeit bestehen soll, kontinuierliche Messungen vorzunehmen.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass das Rheometer von der Extruderschnecke gezielt in Abhängigkeit von dem Material bzw. dem Innendruck des Materials gefüllt wird. Durch die Einstellbarkeit des Materialstroms, der das Rheometer füllt, lässt sich überraschend die Neigung von hochviskosen Fluiden zur Wandablösung kompensieren. Bei hochviskosen Fluiden entsteht bei der entsprechenden volumetrischen Förderung ein höherer Druck. Durch die Druckzunahme lässt sich die Neigung zum Wandgleiten im Rheometer reduzieren.

Andererseits ist ein Extruder, beispielsweise ein typischer Schneckenextruder, kein volumetrischer Förderer. Dementsprechend ist es erfindungsgemäß vorgesehen, die Drehzahl des Extruders für den genannten Zweck zu erhöhen, bzw. in allgemeiner Weise so einstellbar zu machen, dass der Innendruck des Rheometers in Abhängigkeit von dem gemessenen Fluid optimiert ist.

Besonders günstig in diesem Zusammenhang ist es, wenn ein Drucksensor den Innendruck des Fluids erfasst und die Drehzahl des Extruders in Abhängigkeit hiervon eingestellt wird.

Erfindungsgemäß wird auch in günstiger Ausgestaltung die Erwärmung im Bereich der Messkammer des Rheometers erfasst. Durch zunehmende innere Reibung entsteht eine zunehmende Erwärmung. Durch Reduktion der Drehzahl der Extruderschnecke kann die Massetemperatur bevorzugt auf Solltemperatur gebracht werden, wobei der Druck in der Messkammer über den Antrieb des Extruders in weiten Bereichen einstellbar ist.

Die Erfindung erlaubt die Realisierung eines geschlossenen Systems, bei dem also die Auslassöffnung der Messkammer verschlossen wird, wenn die Messkammer vollständig gefüllt ist, aber auch die Realisierung eines offenen Systems. Im zweiten Fall dient die Breitschlitzdüse des Extruders als Strömungswiderstand, gegen den ein Druck aufgebaut wird.

Überraschend lässt sich erfindungsgemäß durch die Druckerhöhung das Wandrutschen vollständig vermeiden. Erfindungsgemäß wird hierzu ein besonders hoher Massedruck durch den Extruder bereitgestellt, so dass sich ein besonders großer Reibungswiderstand gegenüber der Wand ergibt, der ein Abreißen dort verhindert.

Ein weiterer erfindungsgemäßer Vorteil ist auch die Reduktion der Analysezeit, gerade auch bei hochviskosen und elastischen Polymerschmelzen und Kautschuk-Mischungen. Die Druckerhöhung erlaubt eine gute Durchmischung zur Reduktion der Temperaturunterschiede, so dass die Messzeit signifikant vermindert werden kann.

Weitere Vorteile, Einzelheiten und Merkmale ergeben sich aus der nachfolgenden Beschreibung eines Ausführungsbeispiels anhand der Zeichnungen:

Es zeigen:
- Fig. 1: eine schematische Ansicht eines Extruders mit einem erfindungsgemäßen Rheometer;
- Fig. 2: eine Schnittansicht eines Details aus Fig. 1.

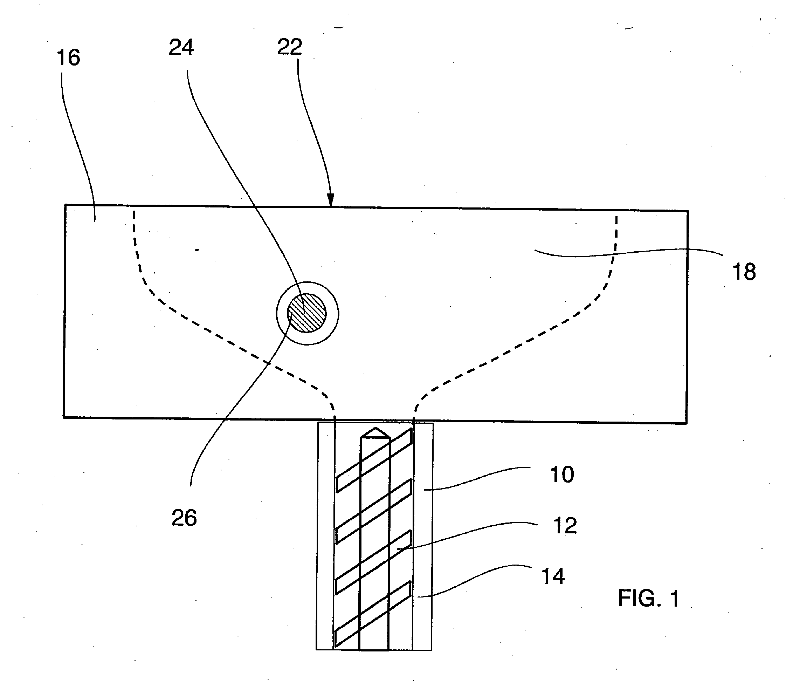

Aus Fig. 1 ist ein Extruder 10 ersichtlich, der eine Extruderschnecke 12 in einem Extrudergehäuse 14 drehbar lagert. Die Extruderschnecke 12 ist über einen nicht dargestellten Extrudermotor antreibbar. Ihre Drehzahl entspricht im Wesentlichen der Förderrate der von dem Extruder extrudierten Masse, wobei jedoch keine exakte Proportionalität vorliegt.

Der Extruder 10 weist anschließend an die Extruderschnecke 12 eine Extruderdüse 16 auf. Dort ist ein Strömungskanal 18 ausgebildet, der der Umformung der kreisrunden Strömung im Bereich der Extruderschnecke in eine flach-rechteckige Strömung dient.

Die Extruderdüse 16 weist in dem dargestellten Ausführungsbeispiel einen Düsenschlitz 22 auf. Der Düsenschlitz 22 ist gegenüber dem Strömungskanal 18 verengt und bildet insofern einen Strömungswiderstand für die Masse, die in dem Strömungskanal 18 strömt.

Erfindungsgemäß ist ein Rheometer 24 vorgesehen, das sich vom Strömungskanal 18 wegerstreckt. In strömungstechnischer Beziehung ist das Rheometer 24 insofern zwischen der Extruderschnecke 12 und dem Düsenschlitz 22 angeordnet. Das Rheometer 24 ist als Rotations-Viskosimeter ausgebildet und arbeitet nach dem Couette-Prinzip. Es weist einen Rotationskörper 26 auf, der in an sich bekannter weise angetrieben ist und bei seiner Drehung die in dem Rheometer 24 aufgenommene Masse auf Scherung bzw. Schub beansprucht. Die Viskosität ergibt sich insofern aus dem Drehwiderstand des Rotationskörpers 26.

Erfindungsgemäß ist für das Befüllen des Rheometers 24 die Drehzahl der Extruderschnecke 12 einstellbar. Bei einer hochviskosen Masse arbeitet die Extruderschnecke 12 gegen einen vergleichsweise hohen Innendruck, während bei einer nahezu flüssigen Masse der Innendruck entsprechend gering ist. Auch für unterschiedliche Viskositäten kann durch Einstellung der Drehzahl der Extruderschnecke die Solltemperatur für die Messung rasch und flexibel erreicht werden.

Durch die Druckerhöhung bei hochviskosen Massen ist zudem die Gefahr des Wandgleiten im Rheometer 24 gebannt. Erfindungsgemäß ist der Innendruck in dem Rheometer 24 so groß, dass es nicht zu einem Gleiten kommt.

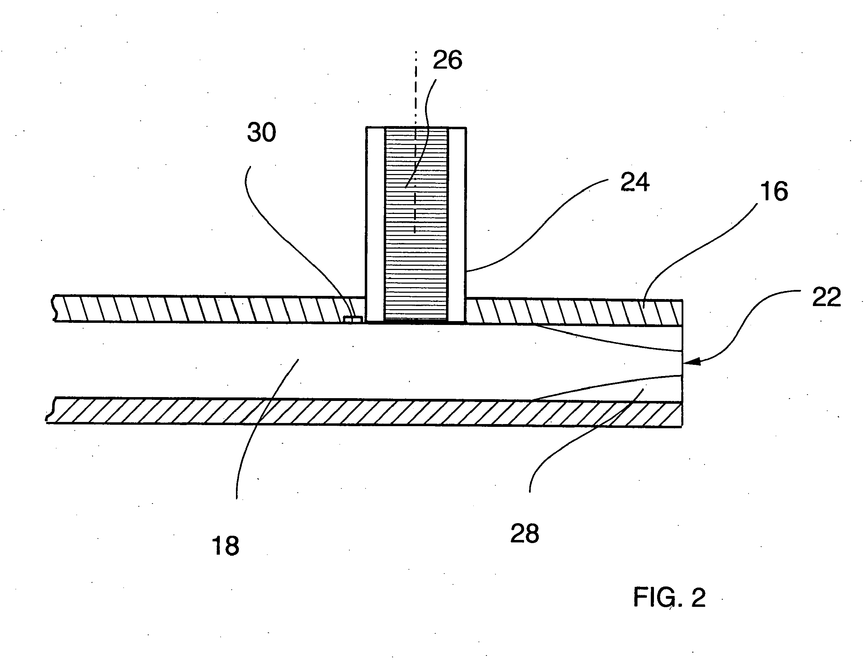

Aus Fig. 2 ist eine Schnittansicht des Rheometers 24 ersichtlich. Der Düsenschlitz 22 ist - wie aus Fig. 2 ersichtlich ist - durch Düsenkörper 28 gebildet, die die erwünschte Durchmesserreduktion ermöglichen. Das Rheometer 24 steht in Strömungsverbindung mit dem Strömungskanal 18, wobei in seiner unmittelbaren Nähe über einen Sensor 30 der Druck, bevorzugt aber sowohl Druck als auch Temperatur der Masse gemessen werden. Hierdurch ergibt sich die Möglichkeit, die Drehzahl der Extruderschnecke für die Befüllung des Rheometers weiter zu optimieren.

In einer modifizierten Ausgestaltung ist der Düsenschlitz 28 vollständig geschlossen. Bei dieser Lösung dient die Extruderschnecke 12 ausschließlich der Füllung des Rheometers 24, wobei jedoch eine kontinuierliche Messung - im Gegensatz zu der in den Figuren dargestellten Ausführungsformen - nicht möglich ist.

In jeden Fall ist das Rheometer 24 in an sich bekannter Weise mit einer Überströmöffnung versehen, die das Ableiten der aus dem Rheometer austretenden Luft ermöglicht und die in an sich bekannter Weise verschließbar ist.

## Patentansprüche

1. Rheometer für die Messung der Viskosität eines Fluids, mit einem Extruder, mit welchem das Rheometer mit dem Fluid füllbar ist, **dadurch gekennzeichnet, dass** die Drehzahl des Extruders (10) für das Befüllen des Rheometers (24) einstellbar ist.

2. Rheometer nach Anspruch 1, **dadurch gekennzeichnet, dass** das Rheometer (24) ausgangsseitig einer Extruderschnecke (12) des Extruders (10) und stromauf einer Extruderdüse (16) angeschlossen ist.

3. Rheometer nach einem der vorhergehenden Ansprüche, **dadurch gekennzeichnet, dass** eine Extruderdüse (16) des Extruders (10) für das Befüllen des Rheometers (24) verschließbar ist.

4. Rheometer nach einem der vorhergehenden Ansprüche, **dadurch gekennzeichnet, dass** im Bereich des Rheometers (24) ein Drucksensor angeordnet ist, und die Drehzahl des Extruders (10) an den erwünschten Druck angepasst wird.

5. Rheomether nach einem der vorhergehenden Ansprüche, **dadurch gekennzeichnet, dass** ein Seitenstrom des Fluids durch das Rheometer (24) geleitet wird.

6. Rheometer nach einem der vorhergehenden Ansprüche, **dadurch gekennzeichnet, dass** das Rheometer (24) kontinuierlich die Viskosität des Fluids misst.

7. Rheometer nach einem der vorhergehenden Ansprüche, **dadurch gekennzeichnet, dass** eine Auswerteschaltung an das Rheometer (24) und insbesondere auch an einen Drucksensor und weiter bevorzugt an mindestens einen Temperatursensor angeschlossen ist, über welchen die Viskosität des Fluids im Vergleich mit insbesondere dem Druck am Rheometer (24) und insbesondere auch mit der Temperatur erfassbar ist.

8. Rheometer nach einem der vorhergehenden Ansprüche, **dadurch gekennzeichnet, dass** der Extruder (10) eine Extruderdüse (16) aufweist, die insbesondere als Flachdüse ausgebildet ist und an der das extrudierte Fluid sichtbar und visuell beurteilbar ist.

9. Rheometer nach einem der vorhergehenden Ansprüche, **dadurch gekennzeichnet, dass** das Rheometer (24) als oszillierendes Viskosimeter ausgebildet ist.

10. Rheometer nach einem der Ansprüche 1 bis 9, **dadurch gekennzeichnet, dass** das Rheometer (24) als rotierendes Viskosimeter ausgebildet ist.

11. Rheometer nach einem der Ansprüche 1 bis 10, **dadurch gekennzeichnet, dass** das Rheometer (24) als rotierendes Viskosimeter mit einer überlagerten Schwingung ausgebildet ist.

12. Rheometer nach einem der vorhergehenden Ansprüche, **dadurch gekennzeichnet, dass** der Massedruck des Fluids in dem Rheometer (24) auf mehr als 30 bar, insbesondere etwa 100 bar, eingestellt wird.

13. Rheometer nach einem der vorhergehenden Ansprüche, **dadurch gekennzeichnet, dass** das Rheometer (24) eine unprofilierte Wandoberfläche aufweist, und dass bei der Messung das Fluid an der Wand des Rheometers (24) haftet.
